# EUROPÄISCHE PATENTSCHRIFT

(11) **EP 2 030 823 B1**
(45) Veröffentlichungstag und Bekanntmachung des Hinweises auf die Patenterteilung: **31.07.2013**
(21) Anmeldenummer: 08162787.9
(22) Anmeldetag: 21.08.2008
(51) Int. Cl.: B60J 7/22

(54) **Windstopeinrichtung für Cabriolet-Fahrzeuge**
Wind deflector for cabriolet vehicles
Système déflecteur de vent pour véhicules cabriolet

(30) Priorität: 30.08.2007 DE 102007042952
(43) Veröffentlichungstag der Anmeldung: 04.03.2009
(73) Patentinhaber: Scambia Industrial Developments Aktiengesellschaft, 9494 Schaan (LI)
(72) Erfinder: Götz, Matthias, 71706 Markgröningen (DE); Riehle, Jörg, 71679 Asperg (DE)
(74) Vertreter: Hoeger, Stellrecht & Partner Patentanwälte

(56) Entgegenhaltungen:
- EP-A- 1 201 475
- EP-A- 1 671 830
- DE-C1- 3 914 035

## Beschreibung

Die Erfindung betrifft eine Windstopeinrichtung für Kraftfahrzeuge, insbesondere für Cabriofahrzeuge, umfassend ein Windschott mit einem sich in einer Fahrzeugquerrichtung erstreckenden Windschottrahmen und einem eine Rahmenöffnung des Windschottrahmens verschließenden strömungshindernden Element, wobei das Windschott um eine Windschottfaltachse zusammenfaltbar ist, eine mit dem Windschott um eine Schwenkachse schwenkbar verbundene Abdeckung mit einem sich in der Fahrzeugquerrichtung und von der Schwenkachse weg erstreckenden Abdeckungsrahmen und mit einem eine Rahmenöffnung des Abdeckungsrahmens verschließenden strömungshindernden Element, wobei der Abdeckungsrahmen um eine Abdeckungsfaltachse zusammenfaltbar ist.

Derartige Windstopeinrichtungen sind aus dem Stand der Technik bekannt.

Beispielsweise offenbart die gattungsgemäße EP 1 671 830 eine derartige Windstopeinrichtung, wobei eine zusammengefaltete Stellung nicht dargestellt ist, so dass sich die Rahmen - wenn überhaupt - nur so falten lassen, dass der eine Rahmen bestenfalls teilweise in der Rahmenöffnung des anderen Rahmens liegt.

Aus der EP 1 201 475 A2 ist ebenfalls eine derartige Windstopeinrichtung bekannt, wobei in der abgeklappten Stellung der eine Rahmen auf dem anderen Rahmen liegt.

Bei derartigen Windstopeinrichtungen besteht das Problem, diese möglichst kompakt zusammenfaltbar zu gestalten, um für das Verstauen der Windstopeinrichtung einen möglichst geringen Raum zu benötigen.

Der Erfindung liegt daher die Aufgabe zugrunde, eine Windstopeinrichtung der gattungsgemäßen Art derart zu verbessern, dass diese möglichst kompakt zusammenfaltbar ist.

Diese Aufgabe wird bei einer Windstopeinrichtung der eingangs beschriebenen Art erfindungsgemäß dadurch gelöst, dass der Windschottrahmen und der Abdeckungsrahmen um die Schwenkachse derart gegeneinander verschwenkbar sind, dass in einer abgeklappten Stellung des Windschottrahmens der eine der Rahmen in der Rahmenöffnung des anderen der Rahmen liegt, und dass in der abgeklappten Stellung des Windschottrahmens die Bauhöhe der Windstopeinrichtung der Rahmenbreite des Rahmens mit der größten Rahmenbreite entspricht.

Der Vorteil dieser Lösung ist darin zu sehen, dass damit bereits bei abgeklappter Stellung des Windschottrahmens eine raumsparende Anordnung des Windschottrahmens relativ zum Abdeckungsrahmen besteht, so dass bei nachfolgender Faltung des Windschottrahmens und des Abdeckungsrahmens ebenfalls der Raumbedarf für die zusammengefaltete Windstopeinrichtung gering ist.

Besonders günstig ist es hierbei, wenn die Rahmenbreite des Windschottrahmens und des Abdeckungsrahmens ungefähr gleich groß ist.

Im Zusammenhang mit den bislang beschriebenen Lösungen wurde davon ausgegangen, dass der Windschottrahmen um die Windschottfaltachse und der Abdeckungsrahmen um die Abdeckungsfaltachse faltbar sind, wobei die Faltungsrichtung offen gelassen wurde.

Prinzipiell ist es denkbar, den Windschottrahmen und die Abdeckungsrahmen in unterschiedlichen Faltrichtungen zu falten.

Besonders wenig Bauraum ist bei einer erfindungsgemäßen Windstopeinrichtung vonnöten, wenn ausgehend von der abgeklappten Stellung des Windschottrahmens der Windschottrahmen und der Abdeckungsrahmen in derselben Faltrichtung faltbar sind, so dass die zusammengefaltete Windstopeinrichtung dann eine Bauhöhe aufweist, die beispielsweise der doppelten Bauhöhe in der abgeklappten Stellung des Windschottrahmens entsprechen kann.

Die Faltung des Windschottrahmens und des Abdeckungsrahmens lässt sich insbesondere dann optimal durchführen, wenn die Windschottfaltachse und die Abdeckungsfaltachse in der abgeklappten Stellung des Windschottrahmens im Wesentlichen miteinander zusammenfallend angeordnet sind, so dass nämlich sowohl der Windschottrahmen als auch der Abdeckungsrahmen im Wesentlichen um die selbe Faltachse gefaltet werden können.

Hinsichtlich der relativen Lage des Windschottrahmens und des Abdeckungsrahmens in der abgeklappten Stellung des Windschottrahmens wurden bislang keine näheren Angaben gemacht.

So ist es für das Falten der Windstopeinrichtung besonders günstig, wenn in der abgeklappten Stellung des Windschottrahmens eine Mittelebene des einen der Rahmen ungefähr parallel zur Mittelebene des anderen der Rahmen liegt.

Besonders günstig ist es dabei, wenn in der abgeklappten Stellung des Windschottrahmens die Mittelebenen des Windschottrahmens und des Abdeckungsrahmens näherungsweise zusammenfallend angeordnet sind.

Besonders günstig für das Falten des Windschotts ist es, wenn die Windschottfaltachse in einer Ebene liegt, die an die Windschottfaltachse angrenzende Enden der Querstreben des Windschottrahmens nicht schneidet.

Ferner ist es für das Falten des Abdeckungsrahmens günstig, wenn die Abdeckungsfaltachse in einer Ebene liegt, die an die Abdeckungsfaltachse angrenzende Enden der Querstreben des Abdeckungsrahmens nicht schneidet.

In beiden Fällen besteht dadurch die Möglichkeit, dass die jeweils an die Windschottfaltachse bzw. Abdeckungsfaltachse angrenzenden Enden der Streben in der gefalteten Stellung aufeinander liegend oder in geringem Abstand voneinander angeordnet werden können, so dass dadurch eine Faltung um im Wesentlichen 180° sowohl des Windschottrahmens bzw. des Abdeckungsrahmens möglich ist.

Hinsichtlich des Verlaufs des strömungshindernden Elements relativ zum Windschottrahmen wurden bislang keine näheren Angaben gemacht. So sieht eine vorteilhafte Lösung vor, dass in der abgeklappten Stellung des Windschottrahmens sich das strömungshindernde Element des Windschotts in einer den Windschottrahmen auf einer Seite tangierenden Fläche erstreckt.

Ferner ist bezüglich der relativen Anordnung des strömungshindernden Elements und der Windschottfaltachse vorgesehen, dass bei einer zweckmäßigen Ausführungsform in der abgeklappten Stellung des Windschottrahmens die Windschottfaltachse im Wesentlichen in der Fläche verläuft, in welcher sich das strömungshindernde Element des Windschotts erstreckt.

Ferner wurden auch keine näheren Angaben zur relativen Anordnung des strömungshindernden Elements der Abdeckung relativ zum Abdeckungsrahmen gemacht. Eine zweckmäßige Lösung sieht dabei vor, dass in der abgeklappten Stellung des Windschottrahmens sich das strömungshindernde Element der Abdeckung in einer den Abdeckungsrahmen auf einer Seite tangierenden Fläche erstreckt.

Ferner sieht eine zweckmäßige relative Anordnung der Abdeckungsfaltachse und des strömungshindernden Elements vor, dass in der abgeklappten Stellung des Windschottrahmens die Abdeckungsfaltachse im Wesentlichen in einer Fläche verläuft, in welcher sich das strömungshindernde Element der Abdeckung erstreckt.

Besonders günstig lässt sich bei der erfindungsgemäßen Windschotteinrichtung ein Falten um die Windschottfaltachse und die Abdeckungsfaltachse durchführen, wenn in der abgeklappten Stellung des Windschottrahmens das strömungshindernde Element des Windschotts und das strömungshindernde Element der Abdeckung im Wesentlichen aneinander anliegen.

Hinsichtlich der Ausbildung des Windschottrahmens wurden im Zusammenhang mit der bisherigen Erläuterung der einzelnen Ausführungsbeispiele keine näheren Angaben gemacht.

So sieht eine vorteilhafte Lösung vor, dass der Windschottrahmen als eine Rahmenöffnung ungefähr U-förmig umschließend ausgebildet ist.

Eine alternative Lösung sieht vor, dass der Windschottrahmen als um eine Rahmenöffnung herum geschlossen verlaufend ausgebildet ist.

Hinsichtlich der Ausbildung des Abdeckungsrahmens ist vorzugsweise vorgesehen, dass der Abdeckungsrahmen als eine Rahmenöffnung ungefähr U-förmig umschließend ausgebildet ist.

Die relative Anordnung der strömungshindernden Elemente des Windschotts und der Abdeckung können in unterschiedlichster Art und Weise erfolgen.

Eine einfache Ausführungsform sieht vor, dass das strömungshindernde Element der Abdeckung separat vom strömungshindernden Element des Windschotts ausgebildet und angeordnet ist.

Eine zweckmäßige Lösung sieht jedoch vor, dass das strömungshindernde Element des Windschotts in das strömungshindernde Element der Abdeckung übergeht.

Im Fall eines Windschottrahmens der geschlossen um die Rahmenöffnung herum verläuft, ist dabei das strömungshindernde Element an den unteren Streben fixiert.

Eine weitere vorteilhafte Ausführungsform sieht vor, dass das strömungshindernde Element des Windschotts und das strömungshindernde Element der Abdeckung in einem zwischen oberen Querstreben des Windschottrahmens und hinteren Querstreben des Abdeckungsrahmens liegenden Übergangsbereich unmittelbar ineinander übergehen.

Besonders günstig ist es bei der erfindungsgemäßen Lösung, wenn das jeweilige strömungshindernde Element aus einem elastischen Material ausgebildet ist.

Im Zusammenhang mit der erfindungsgemäßen Windstopeinrichtung wurden noch keine Ausführungen zur Positionierung des Windschotts relativ zur Abdeckung gemacht.

Eine vorteilhafte Lösung der Windstopeinrichtung sieht dabei vor, dass das Windschott durch eine Positioniereinrichtung in einer hochgeklappten aktiven Stellung und einer abgeklappten inaktiven Stellung stabil positionierbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiel einer erfindungsgemäßen Windstopeinrichtung, montiert an einer bereichsweise dargestellten Fahrzeugkarosserie;
- Fig. 2: eine perspektivische und vergrößerte Darstellung des ersten Ausführungsbeispiels der erfindungsgemäßen Windstopeinrichtung bei hochgeklapptem, in aktiver Stellung stehendem Windschott;
- Fig. 3: eine Darstellung ähnlich Fig. 2 bei abgeklapptem, in inaktiver Stellung stehendem Windschott;
- Fig. 4: eine perspektivische Darstellung des ersten Ausführungsbeispiels der erfindungsgemäßen Windstopeinrichtung in gefalteter Stellung von Windschott und Abdeckung;
- Fig. 5: eine ausschnittsweise perspektivische Darstellung eines ersten Ausführungsbeispiels einer Positioniereinrichtung für das Windschott bei hochgestellter, aktiver Stellung des Windschotts im Zusammenhang mit dem ersten Ausführungsbeispiel der Windstopeinrichtung;
- Fig. 6: eine Darstellung der Positioniereinrichtung bei abgeklappter inaktiver Stellung des Windschotts;
- Fig. 7: eine Darstellung ähnlich Fig. 2 eines zweiten Ausführungsbeispiels einer erfindungsgemäßen Windstopeinrichtung;
- Fig. 8: eine Darstellung ähnlich Fig. 3 des zweiten Ausführungsbeispiels der erfindungsgemäßen Windstopeinrichtung;
- Fig. 9: eine Darstellung ähnlich Fig. 4 des zweiten Ausführungsbeispiels der erfindungsgemäßen Windstopeinrichtung;
- Fig. 10: eine Darstellung eines zweiten Ausführungsbeispiels einer Positioniereinrichtung im Zusammenhang mit dem zweiten Ausführungsbeispiel der erfindungsgemäßen Windstopeinrichtung bei in hochgestellter aktiver Stellung des Windschotts und
- Fig. 11: eine Darstellung des zweiten Ausführungsbeispiels der erfindungsgemäßen Positioniereinrichtung bei abgeklappter inaktiver Stellung des Windschotts.

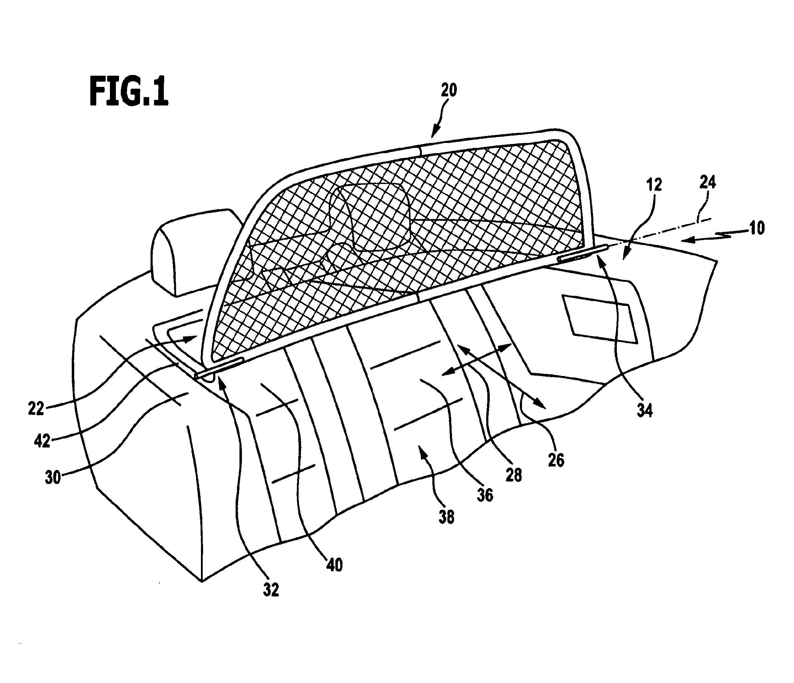

Ein erstes Ausführungsbeispiel einer erfindungsgemäßen Windstopeinrichtung 10 für ein Cabriofahrzeug, dargestellt in Fig. 1 in einem an einer Fahrzeugkarosserie 12 montierten Zustand, umfasst ein Windschott 20 und eine Abdeckung 22, die schwenkbar um eine Schwenkachse 24 miteinander verbunden sind, wobei der Schwenkachse 24 parallel zu einer quer zur Fahrzeuglängsachse 26 verlaufende Fahrzeugquerachse 28 ausgerichtet ist.

Im an der Fahrzeugkarosserie 12 montierten Zustand liegt die Abdeckung 22 in Höhe einer Gürtellinie 30 der Fahrzeugkarosserie 12 an dieser an und ist dabei mit der Fahrzeugkarosserie 12 über Fixiereinrichtungen 32 und 34 verbunden, wobei die Abdeckung 22 einen hinteren Bereich 36 eines Fahrgastraums überdeckt, der durch eine hintere Sitzanlage 38 der Fahrzeugkarosserie 12 begrenzt ist und vor dieser liegt.

Vorzugsweise grenzt die Abdeckung 22 an Rücksitzlehnen 40 der hinteren Sitzanlage 38 an oder überdeckt diese noch, so dass die Abdeckung 22 im Wesentlichen einen in Höhe der Gürtellinie 30 liegenden hinteren Bereich 42 einer Karosserieöffnung des Cabriofahrzeugs im Wesentlichen verschließt.

Die Schwenkachse 24 ist dabei auf einer einer zeichnerisch nicht dargestellten vorderen Sitzreihe zugewandten Seite der Abdeckung 22 angeordnet, so dass das Windschott 20 in seiner hochgeklappten aktiven Stellung im Wesentlichen hinter Rücksitzlehnen und Kopfstützen einer vorderen Sitzreihe steht.

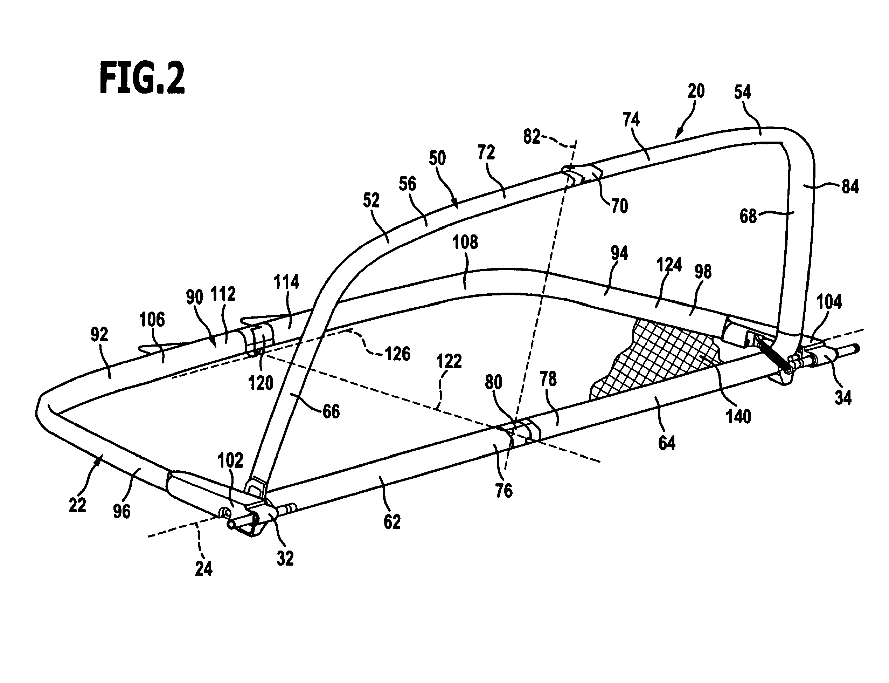

Wie in Fig. 1 und noch vergrößert dargestellt in Fig. 2, umfasst das Windschott 20 einen Windschottrahmen 50, welcher aus zwei Rahmenhälften 52 und 54 gebildet ist, die jeweils ungefähr C-förmig ausgeführt sind und jeweils obere Querstreben 56 und 58 sowie untere Querstreben 62 und 64 aufweisen, die durch seitliche Streben 66 und 68 miteinander verbunden sind. Die oberen Querstreben 56 und 58 sind im Bereich ihrer den seitlichen Querstreben 66 abgewandten freien Enden 72 und 74 mittels eines Gelenks 70 verbunden und die unteren Querstreben 62 und 64 sind im Bereich ihrer freien, den seitlichen Streben 66 und 68 abgewandten Enden 76 und 78 mit einem Gelenk 80 verbunden, wobei die beiden Gelenke 70 und 80 eine Windschottfaltachse 82 festlegen, längs welcher die Rahmenhälften 52 und 54 von einer in Fig. 1 bis 3 dargestellten ausgebreiteten Stellung in eine gefaltete Stellung zusammenfaltbar sind, wie nachstehend noch im Einzelnen beschrieben.

Bei nicht gefalteter Stellung des Windschottrahmens 50 umschließt dieser eine Rahmenöffnung 84.

Außerdem umfasst die Abdeckung 22 einen im Wesentlichen C-förmigen Abdeckungsrahmen 90, der aus zwei Rahmenbügeln 92 und 94 gebildet ist, welche jeweils Seitenstreben 96 und 98 aufweisen, die jeweils von Lagerkörpern 102 und 104 für die schwenkbare Lagerung des Windschotts 20 um die Achse 24 ausgehend sich zu hinteren Querstreben 106 und 108 erstrecken, welche mit einander zugewandten Enden 112 und 114 durch ein Gelenk 120 verbunden sind, das eine Abdeckungsfaltachse 122 definiert, um welche die Rahmenbügel 92 und 94 des Abdeckungsrahmens 90 wie nachfolgend noch im Einzelnen beschrieben, von der in Fig. 1 bis 3 dargestellten ausgebreiteten Stellung in eine gefaltete Stellung bringbar sind.

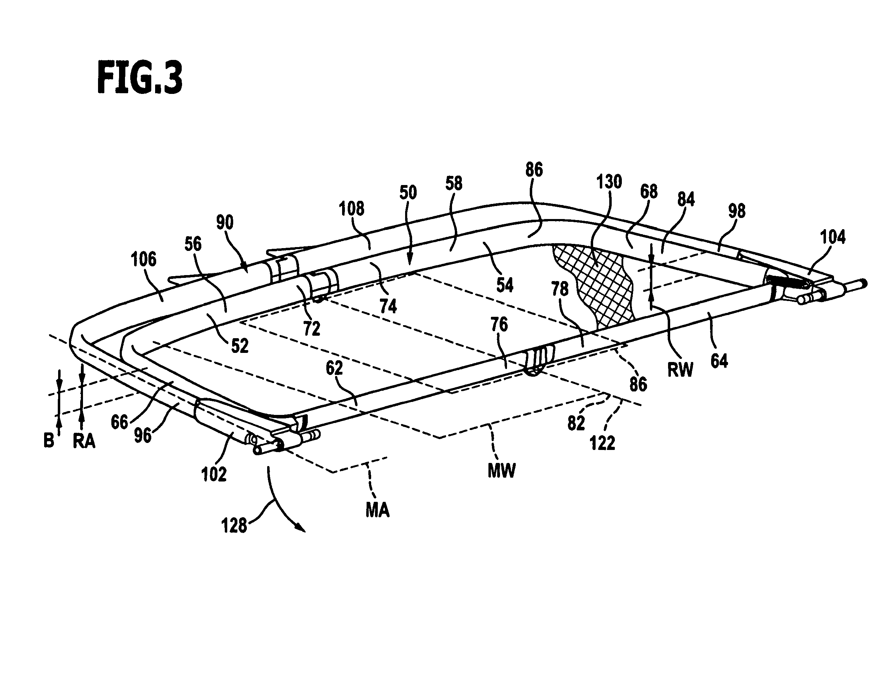

Bei der erfindungsgemäßen Windstopeinrichtung 10 ist das Windschott 20 von einer in Fig. 1 und 2 dargestellten hochgeklappten aktiven Stellung um die Schwenkachse 24 in eine in Fig. 3 dargestellte inaktive oder abgeklappte Stellung verschwenkbar, wobei, wie in Fig. 3 dargestellt, der Windschottrahmen 50 so ausgebildet ist, dass dieser mit seinem die unteren Querstreben 62, 64 umfassenden unteren Bereich zwischen den Lagerkörpern 102 und 104 angeordnet ist und somit der gesamte Windschottrahmen 50 in der in Fig. 3 dargestellten abgeklappten und inaktiven Stellung zwischen den Seitenstreben 96 und 98 sowie den hinteren Querstreben 106 und 108 des Abdeckungsrahmens 90 mit seinen seitlichen Streben 66 und 68 und seinen oberen Querstreben 52 und 54 liegt.

Damit liegt der Windschottrahmen 50 innerhalb einer vom Abdeckungsrahmen 90 mit den Seitenstreben 96 und 98 sowie den hinteren Querstreben 106 und 108 begrenzten und bis zur Schwenkachse 24 reichenden Rahmenöffnung 124.

Der Windschottrahmen 50 weist eine Mittelebene MW auf, die in der abgeklappten Stellung gemäß Fig. 3 mit einer Mittelebene MA des Abdeckungsrahmens 90 im Wesentlichen zusammenfällt.

Ferner weist der Windschottrahmen 50 eine Rahmenbreite RW auf, die ungefähr einer Rahmenbreite RA des Abdeckungsrahmens 90 entspricht, so dass bei zusammenfallenden Mittelebenen MW und MA eine Bauhöhe B der Windstopeinrichtung 10 bei abgeklapptem Windschottrahmen 50 der Rahmenbreite RW und RA im Wesentlichen entspricht.

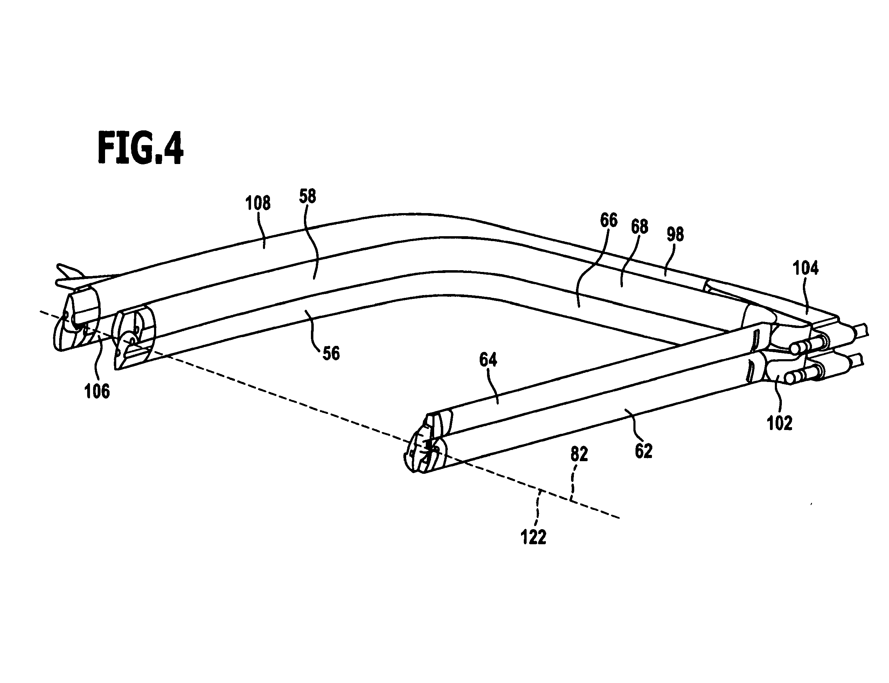

Ferner sind vorzugsweise die Gelenke 70 und 80 sowie das Gelenk 120 so angeordnet, dass in der in Fig. 3 dargestellten abgeklappten Stellung des Windschottrahmens 50 die Windschottfaltachse 82 sowie die Abdeckungsfaltachse 122 im Wesentlichen miteinander zusammenfallen, so dass einer gleichsinnigen Faltung, eine Faltung sowohl des Windschotts 50 als auch der Abdeckung 90 um die gemeinsame Windschottfaltachse 82 sowie die Abdeckungsfaltachse 122 ein einer Faltungsrichtung 128 zum Erreichen der in Fig. 4 dargestellten gefalteten Stellung möglich ist, bei welcher der Lagerkörper 102 unter dem Lagerkörper 104 liegt, die untere Querstrebe 62 unter der oberen Querstrebe 64 liegt, die obere Querstrebe 56 unter der oberen Querstrebe 58 liegt und die hintere Querstrebe 106 unter der hinteren Querstrebe 108 liegen.

Das heißt, dass bei Faltung um die miteinander zusammenfallenden Windschottfaltachse 82 und die Abdeckungsfaltachse 122 die Rahmenhälfte 52 des Windschottrahmens auf einer Seite der Rahmenhälfte 54 und der Rahmenbügel 92 des Abdeckungsrahmens 90 auf derselben Seite des Rahmenbügels 94 des Abdeckungsrahmens 90 liegen.

Bei symmetrischer Ausbildung der Rahmenhälften 52 und 54 bezüglich der Windschottfaltachse 82 und der Rahmenbügel 92 und 94 zur Abdeckungsfaltachse 122 liegen die Seitenstrebe 98 und die Seitenstrebe 96 sowie die seitliche Strebe 68 und die seitliche Strebe 66 jeweils übereinander.

In diesem Fall ist eine optimal kompakte Faltung der Windstopeinrichtung gegeben, bei welcher in der gefalteten Stellung die Bauhöhe das doppelte der Bauhöhe B der Windstopeinrichtung 10 bei abgeklappter Stellung des Windschottrahmens 50 beträgt.

Vorraussetzung dafür, dass eine derart optimal kompakte Faltung möglich ist, ist, dass die Windschottfaltachse 82, wie beispielsweise in Fig. 3 dargestellt, in einer Ebene 86 liegt, die die Enden 72 und 74 der oberen Querstreben 56 und 58 sowie die Enden 76 und 78 der unteren Querstreben 62 und 64 auf einer Seite tangiert, oder berührt, jedoch nicht schneidet, so dass die Enden 72 und 74 sowie 76 und 78 beim Falten um die Windschottfaltachse 82 sich ungefähr parallel zueinander erstrecken und in geringem Abstand voneinander verlaufen oder aneinander anliegen.

In gleicher Weise ist auch die Abdeckungsfaltachse 122 so angeordnet, dass diese in einer Ebene 126 liegt, die ebenfalls die Enden 112 und 114 der hinteren Querstreben 106 und 108 nicht schneidet, sondern nur seitlich berührt, so dass auch beim Falten der hinteren Querstreben 106 und 108 um die Abdeckungsfaltachse 122 diese ungefähr parallel zueinander ausgerichtet werden können, wobei die Enden 112 und 114 sich berühren oder in geringem Abstand voneinander verlaufen.

Bei dem in den Fig. 1 bis 4 dargestellten ersten Ausführungsbeispiel der erfindungsgemäßen Windstopeinrichtung ist die Rahmenöffnung 84 des Windschottrahmens 50 durch ein strömungshinderndes Element 130 verschlossen, welches ungefähr in der Ebene 86 liegt und somit berührend an dem Windschottrahmen 50 auf einer der Abdeckung 90 zugewandten Seite anliegt.

Ferner ist auch der Abdeckungsrahmen 90 durch ein strömungshinderndes Element 140 verschlossen, das an dem Abdeckungsrahmen 90 auf einer der Fahrzeugkarosserie 12 zugewandten Seite anliegt und sich somit im Bereich der Abdeckungsklappachse 122 in der Ebene 126 erstreckt.

Damit liegen in der in Fig. 3 dargestellten abgeklappten Stellung des Windschottrahmens 50 die strömungshindernden Elemente 130 und 140 im Wesentlichen unmittelbar aufeinander auf und dadurch, dass sich diese in den Ebenen 86 bzw. 126 erstrecken, liegen auch die Windschottfaltachse 82 und die Abdeckungsfaltachse 122 in der Fläche, in der sich das jeweilige strömungshindernde Element 130 bzw. 140 erstreckt, so dass ein Falten sowohl des Windschottrahmens 50 als auch des Abdeckungsrahmens 90 ohne zusätzliche Zugeinwirkung auf das strömungshindernde Element 130 bzw. 140 möglich ist.

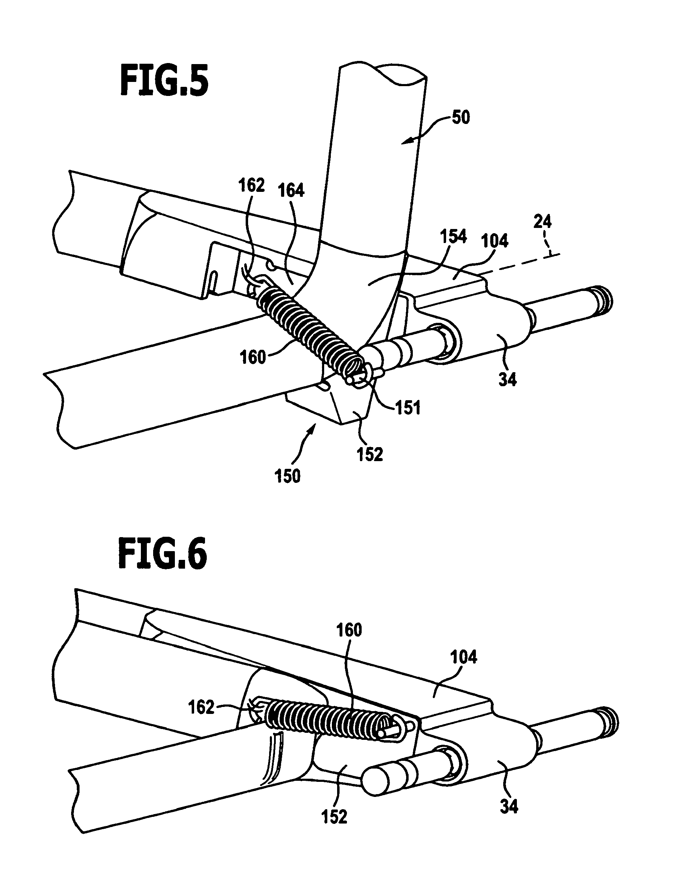

Um das Windschott 20 entweder in der aufgestellten Stellung, dargestellt in Fig. 1 und 2 oder in der abgeklappten Stellung, dargestellt in Fig. 3 sicher zu fixieren, ist, wie vergrößert in Fig. 5 und 6 dargestellt, zwischen dem Windschottrahmen 50 und dem Abdeckungsrahmen 90 ein erstes Ausführungsbeispiel einer Positioniereinrichtung 150 vorgesehen, die ein Lagerzapfen 151 aufweist, der im Inneren eines Fortsatzes 152 eines sich quer der Schwenkachse zu erstreckenden Eckelements 154 angeordnet ist und mit dem Windschottrahmen 50 gemeinsam verschwenkbar ist.

An dem Lagerzapfen 151 greift eine Zugfeder 160 an, die über eine Verankerung 162 im jeweiligen Lagerkörper 102 und 104 verankert ist und sich, zumindest teilweise, in einer Ausnehmung 164 des Lagerkörpers 104 erstreckt.

Der Lagerzapfen 151 der Positioniereinrichtung 150 ist nun sowohl in der aktiven Stellung des Windschottrahmens 50, dargestellt in Fig. 5, als auch in der abgeklappten und inaktiven Stellung des Windschottrahmens 50, dargestellt in Fig. 6, jeweils bezüglich der Verankerung 162 in einer Übertotpunktstellung, so dass die Zugfeder 160 das Bestreben hat, die jeweilige Totpunktstellung aufrecht zu erhalten und somit den Windschottrahmen 50 sowohl in der hochgeklappten aktiven Stellung als auch in der abgeklappten inaktiven Stellung zu halten.

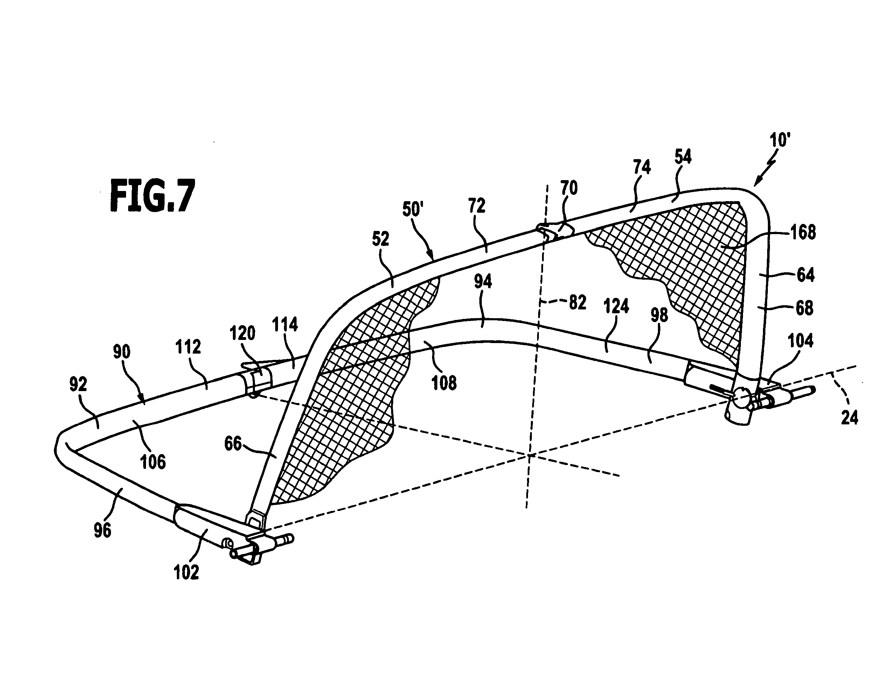

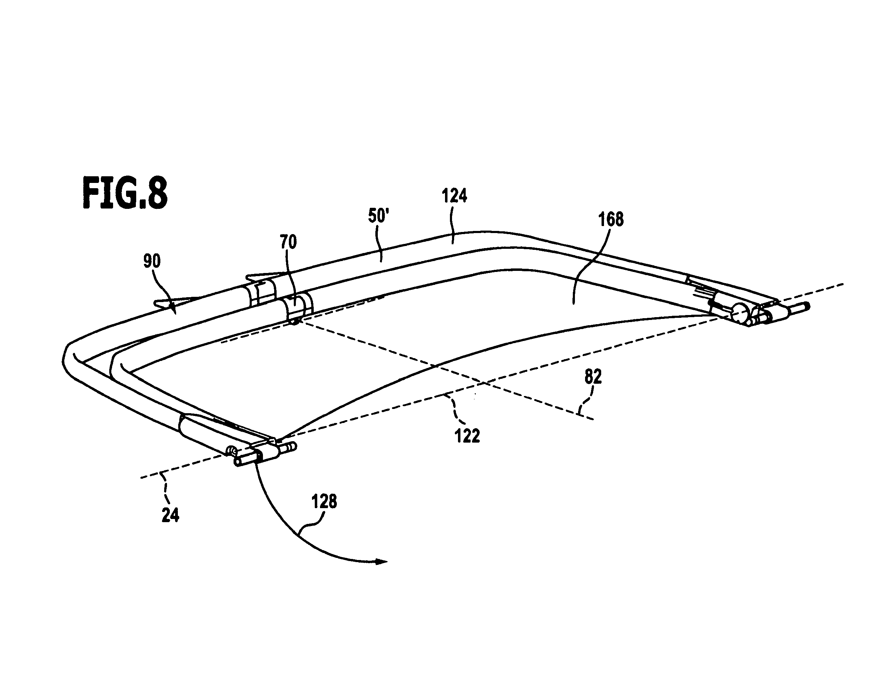

Bei einem zweiten Ausführungsbeispiel einer erfindungsgemäßen Windstopeinrichtung, als Ganzes dargestellt in Fig. 7 und 8 ist der Windschottrahmen 50' im Gegensatz zum ersten Ausführungsbeispiel lediglich als umgekehrt U-förmiger Rahmen ausgebildet, der zur Schwenkachse 24 hin offen ist und somit lediglich die seitlichen Streben 66 und 68 um die oberen Querstreben 52 und 54 umfasst, deren Endbereiche 72 und 74 mit dem Lager 70 verbunden sind, welches die Lage und Ausrichtung der Windschottfaltachse 82 definiert. Das heißt, dass bei dem Windschottrahmen 50' die unteren Querstreben 62 und 64 und das Lager 80 fehlen.

Im Gegensatz dazu ist der Abdeckungsrahmen 90 in gleicher Weise ausgebildet wie beim ersten Ausführungsbeispiel, so dass hinsichtlich der Elemente desselben vollinhaltlich auf die Ausführungen zum ersten Ausführungsbeispiel Bezug genommen wird.

Auch bei diesem Ausführungsbeispiel ist der Windschottrahmen 50' von der in Fig. 7 dargestellt nach oben geklappten aktiven Stellung in eine in Fig. 8 dargestellte abgeklappte inaktive Stellung verschwenkbar, in welcher die Windschottfaltachse 82 sowie die Abdeckungsfaltachse 122 ebenfalls im Wesentlichen zusammenfallen, wobei der Windschottrahmen 50' innerhalb der Rahmenöffnung 124 des Abdeckungsrahmens 90 liegt.

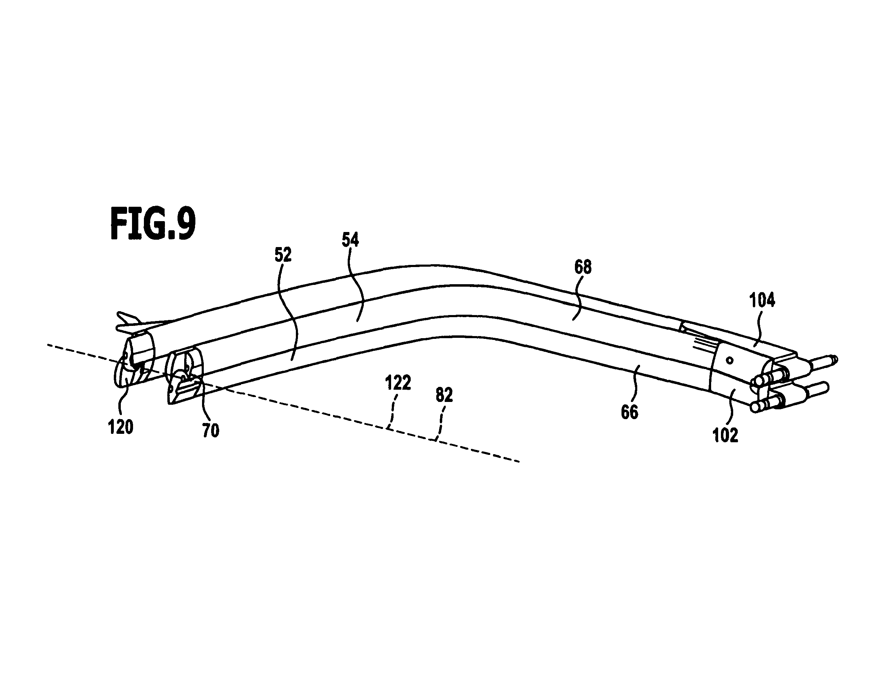

Auch bei diesem Ausführungsbeispiel sind der Windschottrahmen 50' und der Abdeckungsrahmen 90 um die Windschottfaltachse 82 sowie die Abdeckungsfaltachse 122 die im Wesentlichen zusammenfallen, faltbar, wie in Fig. 9 dargestellt, wobei auch in gleicher Weise wie beim ersten Ausführungsbeispiel, der Lagerkörper 102 unter dem Lagerkörper 104 liegt und die seitliche Strebe 66 des Windschottrahmens 50' unter der seitlichen Strebe 88 sowie die Querstrebe 52 unter der Querstrebe 54 liegen.

Bei dem zweiten Ausführungsbeispiel der erfindungsgemäßen Windstopeinrichtung 10' ist ein strömungshinderndes Element 168 vorgesehen, welches sowohl eine Strömung durch die Rahmenöffnung 84 des Windschottrahmens 50' als auch eine Strömung durch die Rahmenöffnung 124 des Abdeckrahmens 90 verhindert, wobei sich das strömungshindernde Element 168 jeweils von dem Windschottrahmen 50', und zwar von einer der Abdeckung 22 zugewandten Seite desselben bis zu dem Abdeckungsrahmen 90 erstreckt und an diesem auf einer der Fahrzeugkarosserie 12 zugewandten Seite gehalten ist, so dass sich das strömungshindernde Element 168 in dem in Fig. 7 dargestellten aufgestellten Zustand des Windschotts 20 in Form einer durchgebogenen Fläche zwischen dem Windschottrahmen 50' und dem Abdeckungsrahmen 90 erstreckt, und dabei einerseits zwischen den oberen Querstreben 52 und 54 des Windschottrahmens 50' und den hinteren Querstreben 92 und 94 des Abdeckungsrahmens 90 gespannt ist und andererseits auch zwischen den Seitenstreben 96 und 98 des Abdeckungsrahmens 90 und den seitlichen Streben 66 und 68 des Windschottrahmens 50' gespannt gehalten ist.

Vorzugsweise ist dabei das strömungshindernde Element 168 als in sich dehnbares Element ausgebildet, welches bei aufgestelltem Windschottrahmen 50' unter Spannung aufgespannt gehalten ist, während in der abgelegten inaktiven Stellung des Windschottrahmens 50', dargestellt in Fig. 8, die Spannung geringer ist und sich das strömungshindernde Element 168 in dieser Stellung in den Ebenen 86 und 126, die im Wesentlichen zusammenfallen, erstreckt.

Da auch die Windschottfaltachse 82 und die Abdeckungsfaltachse 122 in der abgeklappten Stellung des Windschottrahmens 50' zusammenfallen, ist auch bei diesem Ausführungsbeispiel ein gleichsinniges Falten sowohl des Windschottrahmens 50' als auch des Abdeckungsrahmens 90 um die miteinander zusammenfallende Windschottfaltachse 82 und Abdeckungsfaltachse 122 in der Faltungsrichtung 128 möglich, ohne dass zusätzliche Zugkräfte auf das strömungshindernde Element 168 einwirken.

Zum Festlegen des Windschottrahmens 50' in seiner aufgestellten und seiner abgeklappten Stellung ist bei einem zweiten Ausführungsbeispiel einer erfindungsgemäßen Positioniereinrichtung 150' in den Lagerkörpern 102 und 104 ein federbeaufschlagter Rastbolzen 170 vorgesehen, welcher mit Rastausnehmungen 172 und 174 in einer Rastscheibe 176 zusammenwirkt, wobei die Rastscheibe 176 drehfest mit dem Windschottrahmen 50 verbunden ist.

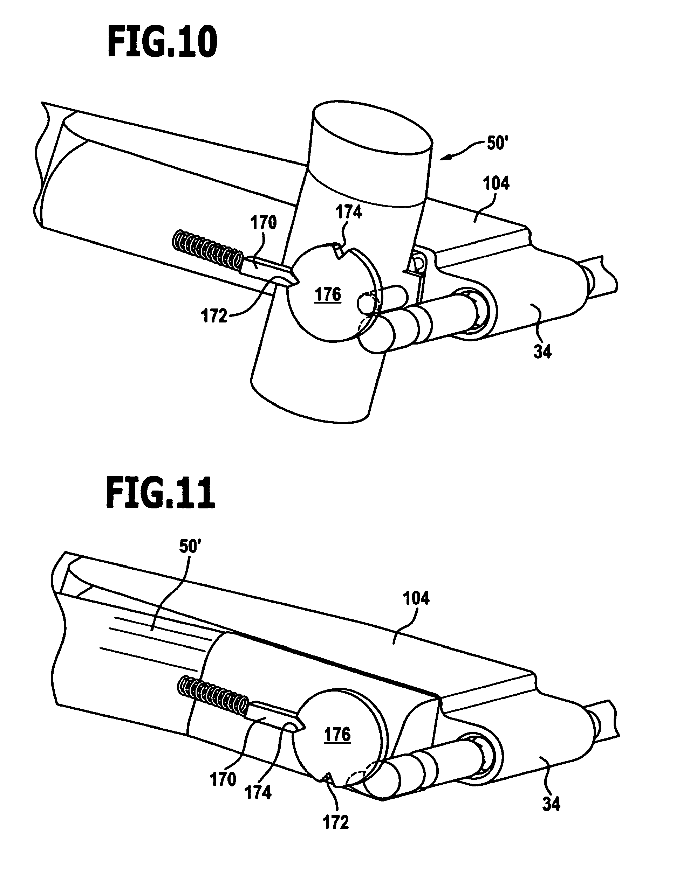

Die Rastausnehmung 172 dient dabei zur Festlegung der hochgeklappten aktiven Stellung des Windschottrahmens 50, während die Rastausnehmung 174 dazu dient, wie in Fig. 11 dargestellt, den Windschottrahmen 50' in der abgeklappten Stellung relativ zum Abdeckungsrahmen 90 festzulegen.

## Patentansprüche

1. Windstopeinrichtung für Kraftfahrzeuge, insbesondere für Cabriofahrzeuge, umfassend ein Windschott (20) mit einem sich in einer Fahrzeugquerrichtung (28) erstreckenden Windschottrahmen (50) und einem eine Rahmenöffnung (84) des Windschottrahmens (50) verschließenden strömungshindernden Element (140, 168), wobei das Windschott (20) um eine Windschottfaltachse (82) zusammenfaltbar ist, eine mit dem Windschott (20) um eine Schwenkachse (24) schwenkbar verbundene Abdeckung (22) mit einem sich in der Fahrzeugquerrichtung (28) und von der Schwenkachse (24) weg erstreckenden Abdeckungsrahmen (90) und mit einem eine Rahmenöffnung (124) des Abdeckungsrahmens (90) verschließenden strömungshindernden Element (130), wobei der Abdeckungsrahmen (90) um eine Abdeckungsfaltachse (122) zusammenfaltbar ist,
**dadurch gekennzeichnet, dass** der Windschottrahmen (50) und der Abdeckungsrahmen (90) um die Schwenkachse (24) derart gegeneinander verschwenkbar sind, dass in einer abgeklappten Stellung des Windschottrahmens (50) der eine der Rahmen (50, 90) in der Rahmenöffnung (124, 84) des anderen der Rahmen (90, 50) liegt, und dass in der abgeklappten Stellung des Windschottrahmens (50) die Bauhöhe der Windstopeinrichtung der Rahmenbreite des Rahmens (50, 90) mit der größten Rahmenbreite (RW, RA) entspricht.

2. Windstopeinrichtung nach einem der voranstehenden Ansprüche, **dadurch gekennzeichnet, dass** ausgehend von der abgeklappten Stellung des Windschottrahmens (50) der Windschottrahmen (50) und der Abdeckungsrahmen (90) in derselben Faltrichtung (128) faltbar sind.

3. Windstopeinrichtung nach einem der voranstehenden Ansprüche, **dadurch gekennzeichnet, dass** die Windschottfaltachse (82) und die Abdeckungsfaltachse (122) in der abgeklappten Stellung des Windschottrahmens (50) im Wesentlichen miteinander zusammenfallend angeordnet sind.

4. Windstopeinrichtung nach einem der voranstehenden Ansprüche, **dadurch gekennzeichnet, dass** in der abgeklappten Stellung des Windschottrahmens (50) eine Mittelebene (MW, MA) des einen der Rahmen (50, 90) ungefähr parallel zur Mittelebene (MA, MW) des anderen der Rahmen (90, 50) liegt.

5. Windstopeinrichtung nach einem der voranstehenden Ansprüche, **dadurch gekennzeichnet, dass** in der abgeklappten Stellung des Windschottrahmens (50) die Mittelebene (MW) des Windschottrahmens (50) und die Mittelebene (MA) des Abdeckungsrahmens (90) näherungsweise zusammenfallend angeordnet sind.

6. Windstopeinrichtung nach einem der voranstehenden Ansprüche, **dadurch gekennzeichnet, dass** die Windschottfaltachse (82) in einer Ebene (86) liegt, die an die Windschottfaltachse (82) angrenzende Enden (72, 74, 76, 78) der Querstreben (56, 58, 62, 64) des Windschottrahmens (50) nicht schneidet.

7. Windstopeinrichtung nach einem der voranstehenden Ansprüche, **dadurch gekennzeichnet, dass** die Abdeckungsfaltachse (122) in einer Ebene (126) liegt, die an die Abdeckungsfaltachse (122) angrenzende Enden (112, 114) der Querstreben (104, 108) des Abdeckungsrahmens (90) nicht schneidet.

8. Windstopeinrichtung nach einem der voranstehenden Ansprüche, **dadurch gekennzeichnet, dass** in der abgeklappten Stellung des Windschottrahmens (50) sich das strömungshindernde Element des Windschotts (20) in einer den Windschottrahmen (50) auf einer Seite tangierenden Fläche erstreckt.

9. Windstopeinrichtung nach einem der voranstehenden Ansprüche, **dadurch gekennzeichnet, dass** in der abgeklappten Stellung des Windschottrahmens (50) die Windschottfaltachse (82) im Wesentlichen in der Fläche verläuft, in welcher sich das strömungshindernde Element (130, 168) des Windschotts (20) erstreckt.

10. Windstopeinrichtung nach einem der voranstehenden Ansprüche, **dadurch gekennzeichnet, dass** in einer abgeklappten Stellung des Windschottrahmens (50) sich das strömungshindernde Element (130, 168) der Abdeckung (22) in einer den Abdeckungsrahmen (90) auf einer Seite tangierenden Fläche erstreckt.

11. Windstopeinrichtung nach einem der voranstehenden Ansprüche, **dadurch gekennzeichnet, dass** in der abgeklappten Stellung des Windschottrahmens (50) die Abdeckungsfaltachse (122) im Wesentlichen in einer Fläche verläuft, in welcher sich das strömungshindernde Element (130, 168) der Abdeckung (22) erstreckt.

12. Windstopeinrichtung nach einem der voranstehenden Ansprüche, **dadurch gekennzeichnet, dass** in der abgeklappten Stellung des Windschottrahmens (50) das strömungshindernde Element (120, 168) des Windschotts (20) und das strömungshindernde Element (130, 168) der Abdeckung (22) im Wesentlichen aneinander anliegen.

13. Windstopeinrichtung nach einem der voranstehenden Ansprüche, **dadurch gekennzeichnet, dass** das strömungshindernde Element (168) des Windschotts (20) in das strömungshindernde Element (168) der Abdeckung (22) übergeht.

14. Windstopeinrichtung nach einem der voranstehenden Ansprüche, **dadurch gekennzeichnet, dass** das strömungshindernde Element des Windschotts und das strömungshindernde Element der Abdeckung in einem zwischen oberen Querstreben (56, 58) des Windschottrahmens (50) und einer hinteren Querstrebe (106, 108) des Abdeckungsrahmens (90) liegenden Übergangsbereich unmittelbar ineinander übergehen.

## Claims

1. Wind stop device for motor vehicles, in particular for convertible vehicles, comprising a wind blocker (20) with a wind blocker frame (50) extending in a transverse direction (28) of the vehicle and a flow-inhibiting element (140, 168) closing a frame opening (84) of the wind blocker frame (50), wherein the wind blocker (20) is foldable about a wind blocker folding axis (82), a cover (22) connected to the wind blocker (20) so as to be pivotable about a pivot axis (24) and having a cover frame (90) extending in the transverse direction (28) of the vehicle and away from the pivot axis (24) and a flow-inhibiting element (130) closing a frame opening (124) of the cover frame (90), wherein the cover frame (90) is foldable about a cover folding axis (122),
**characterized in that** the wind blocker frame (50) and the cover frame (90) are pivotable about the pivot axis (24) relative to one another in such a manner that in a folded down position of the wind blocker frame (50) one of the frames (50, 90) is located in the frame opening (124, 84) of the other one of the frames (90, 50), and that in the folded down position of the wind blocker frame (50) the constructional height of the wind stop device corresponds to the frame width of the frame (50, 90) with the greatest frame width (RW, RA).

2. Wind stop device as defined in any one of the preceding claims, **characterized in that** proceeding from the folded down position of the wind blocker frame (50) the wind blocker frame (50) and the cover frame (90) are foldable in the same direction of folding (128).

3. Wind stop device as defined in any one of the preceding claims, **characterized in that** the wind blocker folding axis (82) and the cover folding axis (122) are arranged in the folded down position of the wind blocker frame (50) so as to essentially coincide with one another.

4. Wind stop device as defined in any one of the preceding claims, **characterized in that** in the folded down position of the wind blocker frame (50) a central plane (MW, MA) of one of the frames (50, 90) is located approximately parallel to the central plane (MA, MW) of the other one of the frames (90, 50).

5. Wind stop device as defined in any one of the preceding claims, **characterized in that** in the folded down position of the wind blocker frame (50) the central plane (MW) of the wind blocker frame (50) and the central plane (MA) of the cover frame (90) are arranged so as to approximately coincide.

6. Wind stop device as defined in any one of the preceding claims, **characterized in that** the wind blocker folding axis (82) is located in a plane (86) not intersecting ends (72, 74, 76, 78) of the cross members (56, 58, 62, 64) of the wind blocker frame (50), said ends bordering on the wind blocker folding axis (82).

7. Wind stop device as defined in any one of the preceding claims, **characterized in that** the cover folding axis (122) is located in a plane (126) not intersecting ends (112, 114) of the cross members (104, 108) of the cover frame (90), said ends bordering on the cover folding axis (122).

8. Wind stop device as defined in any one of the preceding claims, **characterized in that** in the folded down position of the wind blocker frame (50) the flow-inhibiting element of the wind blocker (20) extends in a surface area tangent to the wind blocker frame (50) on one side.

9. Wind stop device as defined in any one of the preceding claims, **characterized in that** in the folded down position of the wind blocker frame (50) the wind blocker folding axis (82) extends essentially in the surface area, in which the flow-inhibiting element (130, 168) of the wind blocker (20) extends.

10. Wind stop device as defined in any one of the preceding claims, **characterized in that** in a folded down position of the wind blocker frame (50) the flow-inhibiting element (130, 168) of the cover (22) extends in a surface area tangent to the cover frame (90) on one side.

11. Wind stop device as defined in any one of the preceding claims, **characterized in that** in the folded down position of the wind blocker frame (50) the cover folding axis (122) extends essentially in a surface area, in which the flow-inhibiting element (130, 168) of the cover (22) extends.

12. Wind stop device as defined in any one of the preceding claims, **characterized in that** in the folded down position of the wind blocker frame (50) the flow-inhibiting element (120, 168) of the wind blocker (20) and the flow-inhibiting element (130, 168) of the cover (22) abut essentially on one another.

13. Wind stop device as defined in any one of the preceding claims, **characterized in that** the flow-inhibiting element (168) of the wind blocker (20) merges into the flow-inhibiting element (168) of the cover (22).

14. Wind stop device as defined in any one of the preceding claims, **characterized in that** the flow-inhibiting element of the wind blocker and the flow-inhibiting element of the cover merge directly into one another in an area of transition lying between upper cross members (56, 58) of the wind blocker frame (50) and a rear cross member (106, 108) of the cover frame (90).

## Revendications

1. Système déflecteur de vent pour véhicules automobiles, en particulier pour véhicules cabriolet, comprenant un pare-vent (20) avec un cadre de pare-vent (50) s'étendant dans une direction transversale (28) du véhicule et un élément s'opposant à l'écoulement (140, 168) fermant une ouverture de cadre (84) du cadre de pare-vent (50), dans lequel le pare-vent (20) est repliable autour d'un axe de pliage de pare-vent (82), un couvercle (22) relié au pare-vent (20) de façon pivotante autour d'un axe de pivotement (24) avec un cadre de couvercle (90) s'étendant dans la direction transversale (28) du véhicule et s'écartant de l'axe de pivotement (24) et avec un élément s'opposant à l'écoulement (130) fermant une ouverture de cadre (124) du cadre de couvercle (90), dans lequel le cadre de couvercle (90) est repliable autour d'un axe de pliage de couvercle (122), **caractérisé en ce que** le cadre de pare-vent (50) et le cadre de couvercle (90) peuvent pivoter l'un par rapport à l'autre autour de l'axe de pivotement (24), de telle manière que, dans une position rabattue du cadre de pare-vent (50), l'un des cadres (50, 90) se trouve dans l'ouverture de cadre (124, 84) de l'autre des cadres (90, 50), et **en ce que**, dans la position rabattue du cadre de pare-vent (50), la hauteur de construction du système déflecteur de vent correspond à la largeur de cadre du cadre (50, 90) ayant la plus grande largeur de cadre (RW, RA).

2. Système déflecteur de vent selon la revendication précédente, **caractérisé en ce que**, en partant de la position rabattue du cadre de pare-vent (50), le cadre de pare-vent (50) et le cadre de couvercle (90) sont pliables dans la même direction de pliage (128).

3. Système déflecteur de vent selon l'une quelconque des revendications précédentes, **caractérisé en ce que** l'axe de pliage de pare-vent (82) et l'axe de pliage de couvercle (122) sont disposés essentiellement en coïncidence l'un avec l'autre dans la position rabattue du cadre de pare-vent (50).

4. Système déflecteur de vent selon l'une quelconque des revendications précédentes, **caractérisé en ce que**, dans la position rabattue du cadre de pare-vent (50), un plan moyen (MW, MA) d'un des cadres (50, 90) est sensiblement parallèle au plan moyen (MA, MW) de l'autre des cadres (90, 50).

5. Système déflecteur de vent selon l'une quelconque des revendications précédentes, **caractérisé en ce que**, dans la position rabattue du cadre de pare-vent (50), le plan moyen (MW) du cadre de pare-vent (50) et le plan moyen (MA) du cadre de couvercle (90) sont disposés pratiquement en coïncidence.

6. Système déflecteur de vent selon l'une quelconque des revendications précédentes, **caractérisé en ce que** l'axe de pliage de pare-vent (82) est situé dans un plan (86), qui ne coupe pas les extrémités (72, 74, 76, 78) des traverses (56, 58, 62, 64) du cadre de pare-vent (50) adjacentes à l'axe de pliage de pare-vent (82).

7. Système déflecteur de vent selon l'une quelconque des revendications précédentes, **caractérisé en ce que** l'axe de pliage de couvercle (122) est situé dans un plan, qui ne coupe pas les extrémités (112, 114) des traverses (104, 108) du cadre de couvercle (90) adjacentes à l'axe de pliage de couvercle (122).

8. Système déflecteur de vent selon l'une quelconque des revendications précédentes, **caractérisé en ce que**, dans la position rabattue du cadre de pare-vent (50), l'élément du pare-vent (20) s'opposant à l'écoulement s'étend dans une face tangente sur un côté au cadre de pare-vent (50).

9. Système déflecteur de vent selon l'une quelconque des revendications précédentes, **caractérisé en ce que**, dans la position rabattue du cadre de pare-vent (50), l'axe de pliage de pare-vent (82) s'étend essentiellement dans la face dans laquelle s'étend l'élément (130, 168) du pare-vent (20) s'opposant à l'écoulement.

10. Système déflecteur de vent selon l'une quelconque des revendications précédentes, **caractérisé en ce que**, dans une position rabattue du cadre de pare-vent (50), l'élément (130, 168) du couvercle (22) s'opposant à l'écoulement s'étend dans une face tangente sur un côté au cadre de couvercle (90).

11. Système déflecteur de vent selon l'une quelconque des revendications précédentes, **caractérisé en ce que**, dans la position rabattue du cadre de pare-vent (50), l'axe de pliage de couvercle (122) s'étend essentiellement dans une face, dans laquelle s'étend l'élément (130, 168) du couvercle (22) s'opposant à l'écoulement.

12. Système déflecteur de vent selon l'une quelconque des revendications précédentes, **caractérisé en ce que**, dans la position rabattue du cadre de pare-vent (50), l'élément (120, 168) du pare-vent (20) s'opposant à l'écoulement et l'élément (130, 168) du couvercle (22) s'opposant à l'écoulement s'appliquent essentiellement l'un sur l'autre.

13. Système déflecteur de vent selon l'une quelconque des revendications précédentes, **caractérisé en ce que** l'élément (168) du pare-vent (20) s'opposant à l'écoulement se prolonge dans l'élément (168) du couverte (22) s'opposant à l'écoulement.

14. Système déflecteur de vent selon l'une quelconque des revendications précédentes, **caractérisé en ce que** l'élément du pare-vent s'opposant à l'écoulement et l'élément du couvercle s'opposant à l'écoulement se prolongent directement l'un dans l'autre dans une région de transition située entre des traverses supérieures (56, 58) du cadre de pare-vent (50) et une traverse postérieure (106, 108) du cadre de couvercle (90).
